# EUROPÄISCHE PATENTSCHRIFT

(11) **EP 4 314 723 B1**
(45) Veröffentlichungstag und Bekanntmachung des Hinweises auf die Patenterteilung: **27.08.2025**
(21) Anmeldenummer: 22716193.2
(22) Anmeldetag: 17.03.2022
(51) Int. Cl.: G01F 1/692, G01F 5/00

(54) **LUFTMASSENSENSOR UND KRAFTFAHRZEUG**
AIR MASS SENSOR AND MOTOR VEHICLE
CAPTEUR DE MASSE D'AIR ET VÉHICULE AUTOMOBILE

(30) Priorität: 30.03.2021 DE 102021203219
(43) Veröffentlichungstag der Anmeldung: 07.02.2024
(73) Patentinhaber: Schaeffler Technologies AG & Co. KG, 91074 Herzogenaurach (DE)
(72) Erfinder: LESSER, Martin, 80687 München (DE); MEYER, Andreas, 80687 München (DE); WEININGER, Holger, 80687 München (DE); HEISS, Marion, 80687 München (DE); MILLIES, Thomas, 80687 München (DE); SOTKOVSKY, Radim, 80687 München (DE); KUSYN, Petr, 80687 München (DE)
(74) Vertreter: Vitesco Technologies
(86) Internationale Anmeldenummer: PCT/EP2022/056937
(87) Internationale Veröffentlichungsnummer: WO 2022/207333

(56) Entgegenhaltungen:
- DE-A1- 102008 049 843
- US-A1- 2004 060 353
- US-B1- 6 557 408
- US-B2- 7 124 626
- US-B2- 7 234 349
- US-B2- 7 305 877
- US-B2- 7 523 659

## Beschreibung

Die vorliegende Erfindung betrifft einen Luftmassensensor zum Bestimmen eines Luftmassenstroms, mit einem Gehäuse und mit einer Sensorelektronik, wobei die Sensorelektronik zumindest teilweise in einer Gehäusekammer des Gehäuses angeordnet ist und wobei das Gehäuse einen Strömungskanal zum Durchleiten eines zu messenden Luftmassenstroms durch das Gehäuse aufweist. Weiter betrifft die Erfindung ein Kraftfahrzeug mit einem solchen Luftmassensensor.

Ein Luftmassensensor der eingangs genannten Art ist z.B. aus den Dokumenten US 8,763,452 B2 und DE 10 2018 219 729 A1 bekannt.

Das Dokument US 7 523 659 B2 zeigt einen Luftmassensensor mit einem Einlasskanal und einem Bypasskanal.

Das Dokument US 6 557 408 B1 zeigt einen Luftmassensensor, der eine Ausgleichsöffnung stromab der Messstelle im Messkanal hat.

Das Dokument US 2004 / 0 060 353 A1 zeigt einen Luftmassensensor mit Schlitzen im Messkanal nahe der Sensoren.

Das Dokument US7 234 349 B2 beschreibt einen Luftmassensensor, der keinen Bypasskanal im Sinne dieser Anmeldung hat.

Das Dokument DE 10 2008 049 843 A1 beschreibt einen Luftmassensensor, der eine Ausgleichsöffnung im Bereich des Messkanals hat.

Die Dokumente US 7 124 626 B2 und US 7 305 877 B2 zeigen jeweils einen Luftmassensensor mit einem Bypass.

Ein solcher Luftmassensensor kann beispielsweise zum Bestimmen eines Luftmassenstroms in einer Ansaugleitung eines Verbrennungsmotors eines Kraftfahrzeugs eingesetzt werden. Hierbei kann es zu Schwingungsanregungen im Bereich der Eigenfrequenzen des Strömungskanals kommen, die das Messergebnis beeinträchtigen. So kann z.B. ein Abgasturbolader hochfrequente Druckpulsationen von bis zu 20 kHz in dem zu messenden Luftmassenstrom hervorrufen. Für bestimmte Anregungsfrequenzen bzw. Anregungsfrequenzbereiche kann es daher zu starken Abweichungen zwischen dem gemessenen Luftmassenstrom und dem tatsächlichen Luftmassenstrom kommen. Diese Abweichungen können sich nachteilig auf den Motorbetrieb auswirken.

Vor diesem Hintergrund liegt der Erfindung die technische Problemstellung zugrunde, einen verbesserten Luftmassensensor anzugeben, der insbesondere robuster gegenüber Schwingungsanregungen von Abgasturboladern ist. Weiter soll ein Kraftfahrzeug mit einem solchen Sensor angegeben werden.

Gemäß einem ersten Aspekt betrifft die Erfindung einen Luftmassensensor zum Bestimmen eines Luftmassenstroms, mit einem Gehäuse und mit einer Sensorelektronik, wobei die Sensorelektronik zumindest teilweise in einer Gehäusekammer des Gehäuses angeordnet ist und wobei das Gehäuse einen Strömungskanal zum Durchleiten eines zu messenden Luftmassenstroms durch das Gehäuse aufweist. Der Luftmassensensor zeichnet sich dadurch aus, dass das Gehäuse zusätzlich zu einer Einlassöffnung und einer Auslassöffnung des Strömungskanals mindestens eine Ausgleichsöffnung aufweist, die den Strömungskanal mit einer Umgebung des Gehäuses verbindet. Die mindestens eine Ausgleichsöffnung ist dabei im Bereich des Einlasses des Strömungskanals und stromaufwärts einer Verzweigung des Strömungskanals angeordnet, im Bereich derer der Messkanal und der Bypasskanal abgezweigt sind.

Die Ausgleichsöffnung ermöglicht daher eine Fluidverbindung zwischen dem Strömungskanal und der Umgebung des Gehäuses, so dass ein Teil des zu messenden Luftmassenstroms aus dem Strömungskanal in die Umgebung des Gehäuses strömen kann, um einen zusätzlichen Druckausgleich zu schaffen. Auf diese Weise können insbesondere die Amplitude von Schwingungsanregungen infolge hochfrequenter Druckpulsationen von Turboladern reduziert werden, so dass auch für kritische Anregungsfrequenzen eine zuverlässige Messung stattfinden kann. Insbesondere können auf diese Weise Eigenfrequenzen des Strömungskanals eliminiert oder eine jeweilige Schwingungsantwort im Bereich einer oder mehrerer Eigenfrequenzen reduziert oder werden.

Es können genau eine Ausgleichsöffnung oder zwei oder mehr Ausgleichsöffnungen vorgesehen sein.

Die Umgebung des Gehäuses kann insbesondere ein Innenraum eines Rohrs, einer Leitung oder dergleichen sein, innerhalb dessen bzw. innerhalb derer der Luftmassensensor zum Bestimmen des Luftmassenstroms angeordnet ist.

Die Ausgleichsöffnung kann eine Durchgangsöffnung sein, wie eine Bohrung oder dergleichen, die in eine Wandung des Gehäuses eingebracht ist.

Alternativ oder ergänzend kann die Ausgleichsöffnung zwischen Gehäuseteilen des Gehäuses gebildet sein. Soweit das Gehäuse beispielsweise ein erstes Gehäuseteil und ein zweites Gehäuseteil hat, die zu dem Gehäuse zusammengesetzt sind, kann die Ausgleichsöffnung eine Aussparung im Bereich einer Naht oder Fügekante sein, im Bereich derer das erste und zweite Gehäuseteil formschlüssig ineinandergreifen und/oder miteinander verbunden sind.

Das erste Gehäuseteil kann beispielsweise ein Deckel oder eine Abdeckung sein. Das zweite Gehäuseteil kann ein Grundkörper des Gehäuses sein, an dem der Deckel befestigt ist.

Die Gehäuseteile können mittels eines Klebers miteinander verbunden sein, wobei die Ausgleichsöffnung zumindest teilweise an einen die Gehäuseteile verbindenden Kleber angrenzt.

Es kann vorgesehen sein, dass die Ausgleichsöffnung Teil einer unterbrochenen Klebenaht oder Teil einer unterbrochenen Kleberaupe ist. Die Ausgleichsöffnung kann daher eine Unterbrechung einer Klebenaht oder Kleberaupe sein, die die Gehäuseteile miteinander verbindet. Insbesondere bildet die Klebenaht oder Kleberaupe eine adhäsive Verbindung der Gehäuseteile und zudem eine Abdichtung des Strömungskanals gegenüber der Umgebung, wobei die Abdichtung lokal unterbrochen ist, um die Ausgleichsöffnung auszubilden.

Zwischen den Gehäuseteilen kann alternativ oder ergänzend eine Dichtung vorgesehen sein, wobei die Ausgleichsöffnung zumindest teilweise an die Dichtung angrenzt. Die Ausgleichsöffnung kann in die Dichtung eingebracht sein oder die Dichtung kann zumindest teilweise unterbrochen sein, um die Ausgleichsöffnung auszubilden.

Der Strömungskanal kann einen Bypass bzw. Bypasskanal und einen Messkanal aufweisen, so dass ein Teil des Luftmassenstroms nicht durch den Messkanal zu einer Messstelle des Luftmassensensors strömt, sondern vor der Messstelle in den Bypasskanal abgezweigt und wieder aus dem Gehäuse geleitet wird.

Die Ausgleichsöffnung kann einen Abstand zu dem Bypasskanal aufweisen.

Alterativ oder ergänzend kann mindestens eine Ausgleichsöffnung zusätzlich zu einer Auslassöffnung des Bypasskanals und/oder des Messkanals in eine den Bypasskanal und/oder den Messkanal begrenzende Wandung des Gehäuses eingebracht sein. In diesem Fall ist die Ausgleichsöffnung stromabwärts der Verzweigung des Strömungskanals angeordnet, im Bereich derer der Messkanal und der Bypasskanal abgezweigt sind.

"Stromabwärts" bedeutet, dass der Luftmassenstrom ein betreffendes Element zeitlich später überströmt oder durchströmt als ein stromaufwärts angeordnetes Element. Eine Einlassöffnung des Messkanals ist daher stromaufwärts der Messstelle angeordnet, während eine Auslassöffnung des Messkanals stromabwärts der Messstelle angeordnet ist.

Die Ausgleichsöffnung kann eine polygonale Form haben, insbesondere eine rechteckige oder dreieckige Form haben. Die Ausgleichsöffnung kann eine kreisrunde oder ovale Form haben. Die Ausgleichsöffnung kann frei geformt sein.

Der Luftmassensensor kann neben dem Messen eines Luftmassenstroms ergänzende Funktionen aufweisen. Beispielsweise kann der Luftmassensensor zusätzlich zum Messen eines Luftmassenstroms zum Messen einer oder mehrerer der nachfolgend aufgelisteten Parameter eingerichtet sein: Druck des Luftmassenstroms; Feuchtigkeit des Luftmassenstroms; Temperatur des Luftmassenstroms.

Ein Messelement der Sensorelektronik des Luftmassensensors kann ein thermisches Messelement ist, insbesondere ein Heißfilm-Luftmassenmesselement sein. Ein solches Heißfilm-Luftmassenmesselement kann beispielsweise zumindest ein Heizelement und zwei Temperatursensoren aufweisen, die von dem Luftmassenstrom überströmt werden, wobei sich der Betrag des Luftmassenstroms aus den voneinander abweichenden gemessenen Temperaturen bzw. den Temperaturprofilen der Temperatursensoren ableiten lässt. Ein solches Heißfilm-Luftmassenmesselement ist beispielsweise in DE 10 2018 219 729 A1 beschrieben.

Es kann vorgesehen sein, dass in der Gehäuse- bzw. Elektronikkammer des Luftmassensensors angeordnete Komponenten der Sensorelektronik zumindest teilweise oder vollständig in einer Vergussmasse vergossen bzw. von einer Vergussmasse umhüllt sind, um die Komponenten der Sensorelektronik vor Umgebungseinflüssen zu schützen.

Es kann vorgesehen sein, dass ein erstes Wandungselement, das den Bypasskanal und den Messkanal zumindest abschnittsweise voneinander separiert, eine zumindest abschnittsweise reduzierte Wandungshöhe aufweist, so dass das erste Wandungselement zumindest abschnittsweise überströmbar ist und/oder eine Durchgangsöffnung aufweist, so dass das erste Wandungselement durchströmbar ist. Der Luftmassensensor zeichnet sich alternativ oder ergänzend dadurch aus, dass ein zweites Wandungselement, das den Bypasskanal und einen Einlass des Strömungskanals zumindest abschnittsweise voneinander separiert, eine zumindest abschnittsweise reduzierte Wandungshöhe aufweist, so dass das zweite Wandungselement zumindest abschnittsweise überströmbar ist und/oder eine Durchgangsöffnung aufweist, so dass das zweite Wandungselement durchströmbar ist.

Die reduzierte Wandungshöhe und/oder die Durchgangsöffnung ermöglichen daher eine zusätzliche Fluidverbindung innerhalb des Strömungskanals, um einen zusätzlichen Druckausgleich für den Messkanal zu schaffen. Auch auf diese Weise können insbesondere die Amplitude von Schwingungsanregungen infolge hochfrequenter Druckpulsationen von Turboladern reduziert werden, so dass auch für kritische Anregungsfrequenzen eine zuverlässige Messung stattfinden kann. Insbesondere können auch auf diese Weise Eigenfrequenzen des Strömungskanals eliminiert oder eine jeweilige Schwingungsantwort im Bereich einer oder mehrerer Eigenfrequenzen reduziert oder werden.

Es kann vorgesehen sein, dass der Strömungskanal und die Elektronikkammer über eine Öffnung miteinander verbunden sind, wobei die Elektronikkammer ein Druckausgleichsvolumen für den Strömungskanal bildet.

Die Öffnung ermöglicht daher eine Fluidverbindung zwischen dem Strömungskanal und der Elektronikkammer, so dass ein Teil des zu messenden Luftmassenstroms aus dem Strömungskanal in die Elektronikkammer strömen kann. Auch auf diese Weise können insbesondere die Amplitude von Schwingungsanregungen infolge hochfrequenter Druckpulsationen von Turboladern reduziert werden, so dass auch für kritische Anregungsfrequenzen eine zuverlässige Messung stattfinden kann. Insbesondere können auch auf diese Weise Eigenfrequenzen des Strömungskanals eliminiert oder eine jeweilige Schwingungsantwort im Bereich einer oder mehrerer Eigenfrequenzen reduziert oder werden.

Gemäß einem zweiten Aspekt betrifft die Erfindung ein Kraftfahrzeug mit einem erfindungsgemäßen Luftmassensensor.

Das Kraftfahrzeug kann einen Verbrennungsmotor aufweisen, wobei der Luftmassensensor in einer Ansaugleitung des Verbrennungsmotors angeordnet ist, um einen Luftmassenstrom innerhalb der Ansaugleitung zu messen. Der Verbrennungsmotor kann einen oder mehrere Turbolader aufweisen.

Nachfolgend wird die Erfindung anhand einer Ausführungsbeispiele darstellenden Zeichnung näher beschrieben. Es zeigen jeweils schematisch:
- Fig. 1: einen erfindungsgemäßen Luftmassensensor in einer perspektivischen Ansicht von oben;
- Fig. 2: den Luftmassensensor aus Fig. 1 ohne Abdeckungen bzw. Deckel;
- Fig. 3: eine weitere Ausgestaltung eines erfindungsgemäßen Luftmassensensors;
- Fig. 4: eine weitere Ausgestaltung eines erfindungsgemäßen Luftmassensensors;
- Fig. 5: eine weitere Ausgestaltung eines erfindungsgemäßen Luftmassensensors;
- Fig. 6: eine weitere Ausgestaltung eines erfindungsgemäßen Luftmassensensors;
- Fig. 7: eine weitere Ausgestaltung eines erfindungsgemäßen Luftmassensensors;
- Fig. 8: eine weitere Ausgestaltung eines erfindungsgemäßen Luftmassensensors;
- Fig. 9: eine Ausgestaltung eines nicht erfindungsgemäßen Luftmassensensors ohne Abdeckungen bzw. Deckel;
- Fig. 10: den Luftmassensensor aus Fig. 9 in vergrößerter Darstellung;
- Fig. 11: ein erfindungsgemäßes Kraftfahrzeug mit einem erfindungsgemäßen Luftmassensensor.

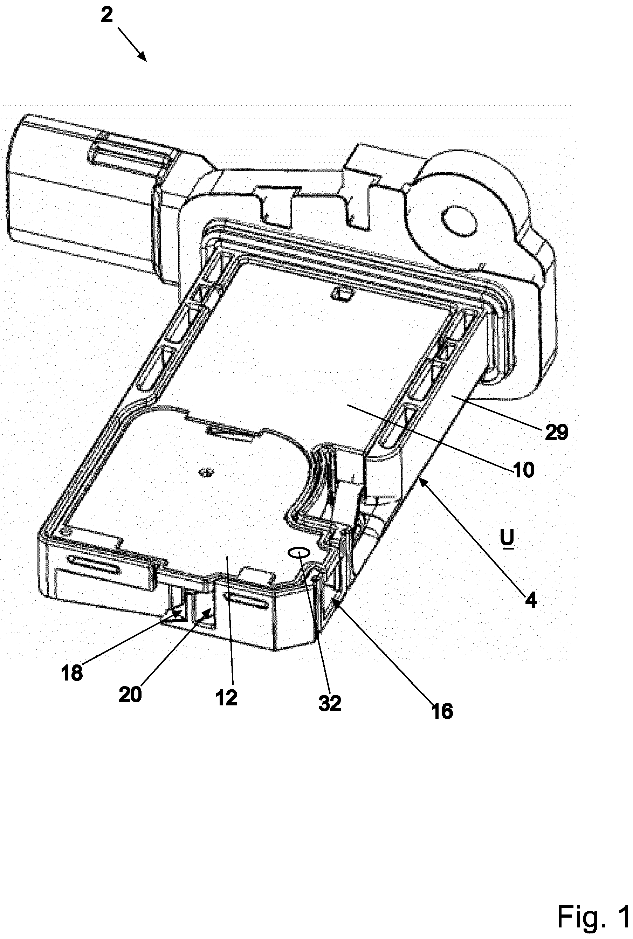

Fig. 1 zeigt einen Luftmassensensor 2 zum Bestimmen eines Luftmassenstroms.

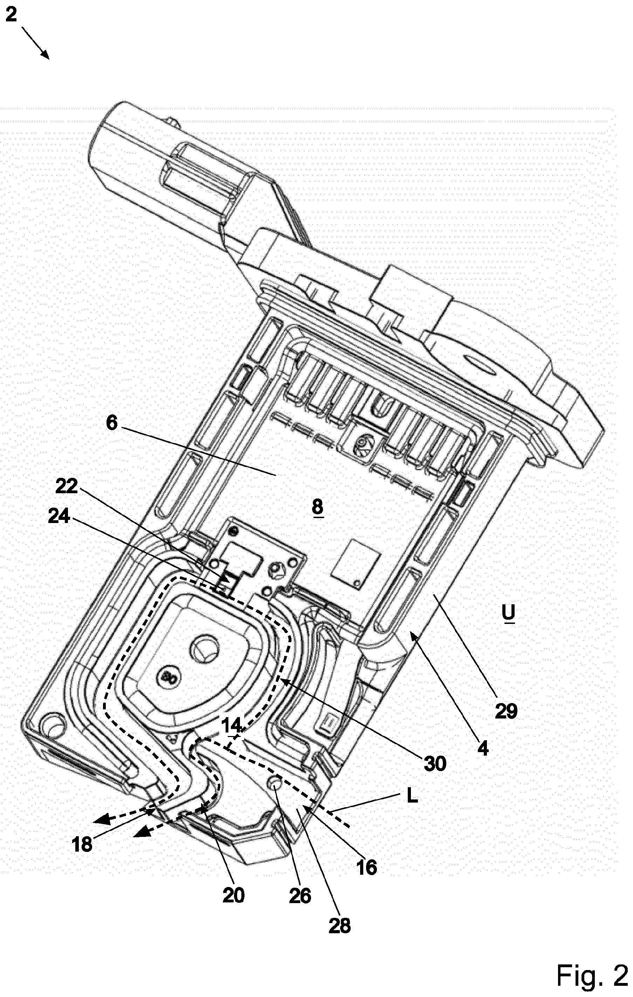

Der Luftmassensensor 2 hat ein Gehäuse 4. Der Luftmassensensor 2 hat eine Sensorelektronik 6, wobei die Sensorelektronik 6 in einer Gehäuse- bzw. Elektronikkammer 8 des Gehäuses 4 angeordnet ist (Fig. 2). Zur Veranschaulichung der Elektronikkammer 8 und der Sensorelektronik 6 sind in Fig. 2 Abdeckungen 10, 12 bzw. Deckel 10, 12 des Gehäuses 4 ausgeblendet.

Das Gehäuse 4 weist einen Strömungskanal 14 zum Durchleiten eines zu messenden Luftmassenstroms L durch das Gehäuse 4 auf.

Der Strömungskanal 14 hat eine Einlassöffnung 16 zum Einleiten des Luftmassenstroms L in das Gehäuse 4. Der Strömungskanal 14 hat eine Auslassöffnung 18 zum Abführen des Luftmassenstroms L aus dem Gehäuse 4.

Der Strömungskanal 14 hat einen Bypass 20 bzw. Bypasskanal 20, so dass ein Teil des Luftmassenstroms L nicht zu einer Messstelle 22 des Luftmassensensors 2 strömt, sondern vor der Messstelle 22 abgezweigt und wieder aus dem Gehäuse 4 geleitet wird.

Im Bereich der Messstelle 22 ist ein Messelement 24 der Sensorelektronik 6 angeordnet. Das Messelement 24 ist ein thermisches Messelement 24 - und zwar vorliegend ein Heißfilm-Luftmassenmesselement 24.

Das Gehäuse 4 weist zusätzlich zu der Einlassöffnung 16 und der Auslassöffnung 18 des Strömungskanals 14 eine Ausgleichsöffnung 26 auf, die den Strömungskanal 14 mit einer Umgebung U des Gehäuses 4 verbindet. Mit anderen Worten besteht zwischen der Umgebung U und dem Strömungskanal 14 eine Fluidverbindung, so dass Luft des Luftmassenstroms L aus dem Strömungskanal 14 in die Umgebung U strömen kann und aus der Umgebung U in den Strömungskanal 14 strömen kann.

Die Ausgleichsöffnung 26 ist vorliegend eine kreiszylindrische Durchgangsöffnung 26, die in eine Wandung 28 eines Grundkörpers 29 des Gehäuses 4 eingebracht ist.

Die Ausgleichsöffnung 26 ist vorliegend im Bereich des Einlasses 16 des Strömungskanals 14 angeordnet und daher stromaufwärts einer Verzweigung des Strömungskanals 14 angeordnet, im Bereich derer der Strömungskanal in einen Messkanal 30 und den Bypasskanal 20 verzweigt wird. Die Ausgleichsöffnung 26 ist daher zum Bypasskanal 20 beabstandet angeordnet.

Eine weitere zusätzliche Ausgleichsöffnung 32 ist zudem in den Deckel 12 des Gehäuses 4 eingebracht, die den Strömungskanal 14 mit der Umgebung U des Gehäuses 4 verbindet.

Der Deckel 12 ist hier ein erstes Gehäuseteil 12 des Gehäuses, der Grundkörper 29 ein zweites Gehäuseteil 29 des Gehäuses 4 und der Deckel 10 ein drittes Gehäuseteil 10 des Gehäuses 4.

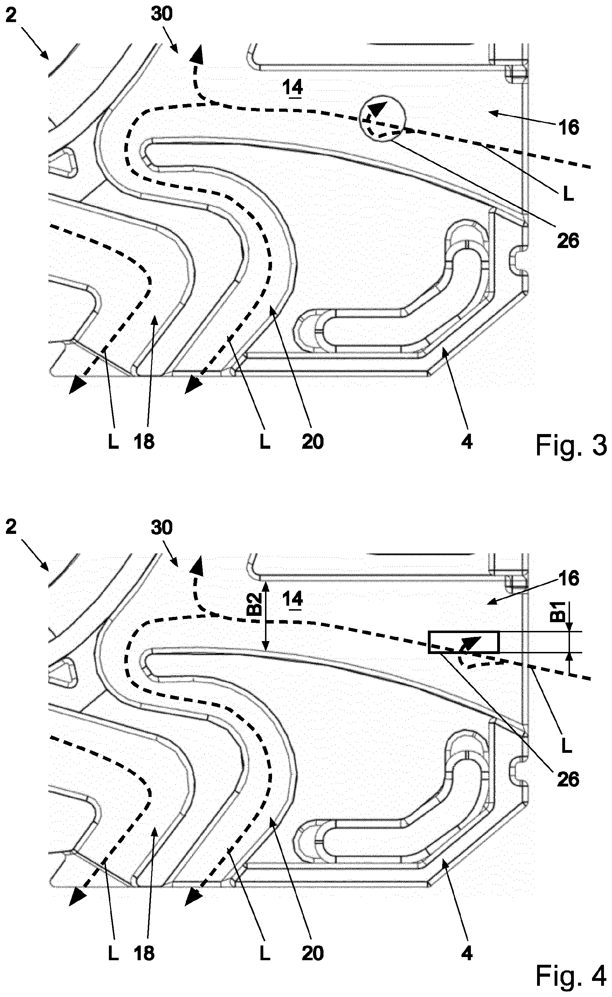

Fig. 3 zeigt eine Ausschnittvergrößerung des Luftmassensensors 2 gemäß Fig. 2 in einer Draufsicht.

Der in den Einlass 16 einströmende Luftmassenstrom L kann teilweise durch die Ausgleichsöffnung 26 entweichen. Dies gilt gleichermaßen für die nicht dargestellte Ausgleichsöffnung 32 des Deckels 12.

Anschließend verzweigt sich der Strömungskanal 14 in den Messkanal 30, der zur Messstelle 24 führt, und den Bypasskanal 20, der die Messstelle 24 umgeht und einen Teil des Luftmassenstroms L aus dem Gehäuse 4 leitet, ohne diesen der Messstelle 24 zuzuführen. Der über den Messkanal 30 der Messstelle 24 zugeführte und durch des Messelement 24 gemessene Luftmassenstrom L wird über die Auslassöffnung 18 des Messkanals 30 aus dem Gehäuse 4 geleitet.

Die Figuren 4 - 8 zeigen weitere Ausführungsbeispiele von Luftmassensensoren 2, die sich lediglich in ihrer Ausgestaltung der Form der Ausgleichsöffnung 26 voneinander unterscheiden.

Fig. 4 zeigt einen Luftmassensensor 2 mit schmaler, rechteckiger Ausgleichsöffnung 26, wobei eine Breite B1 der Ausgleichsöffnung 26 weniger als einem Drittel einer minimalen Breite B2 des Strömungskanals 14 vor der Verzweigung des Strömungskanals 14 in den Messkanal 30 und den Bypasskanal 20 entspricht.

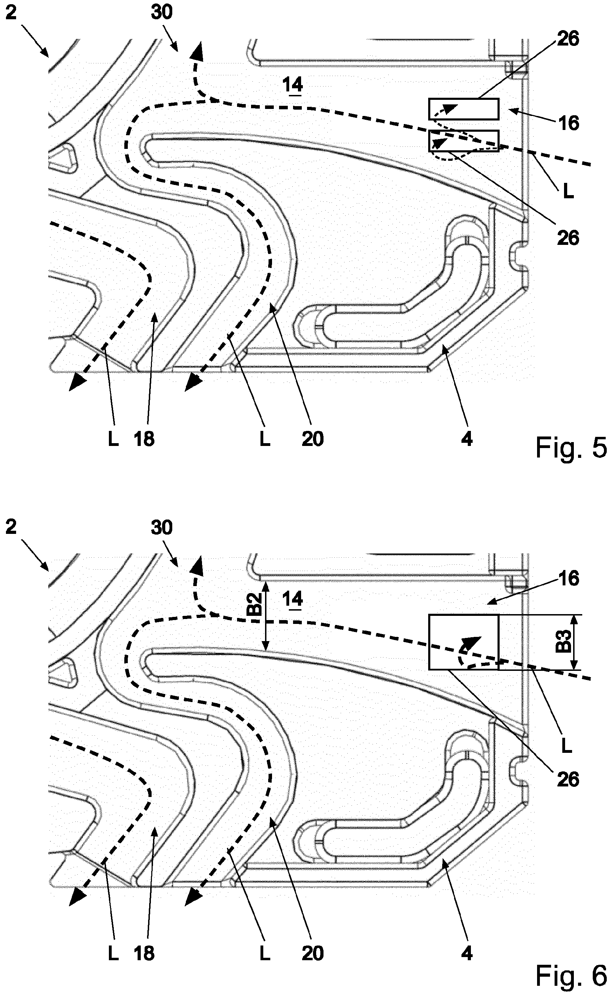

Fig. 5 zeigt einen Luftmassensensor 2 mit zwei schmalen, rechteckigen Ausgleichsöffnungen 26.

Fig. 6 zeigt einen Luftmassensensor 2 mit breiter, rechteckiger Ausgleichsöffnung 26, wobei eine Breite B3 der Ausgleichsöffnung 26 mehr als einem Drittel der minimalen Breite B2 des Strömungskanals 14 vor der Verzweigung des Strömungskanals 14 in den Messkanal 30 und den Bypasskanal 20 entspricht.

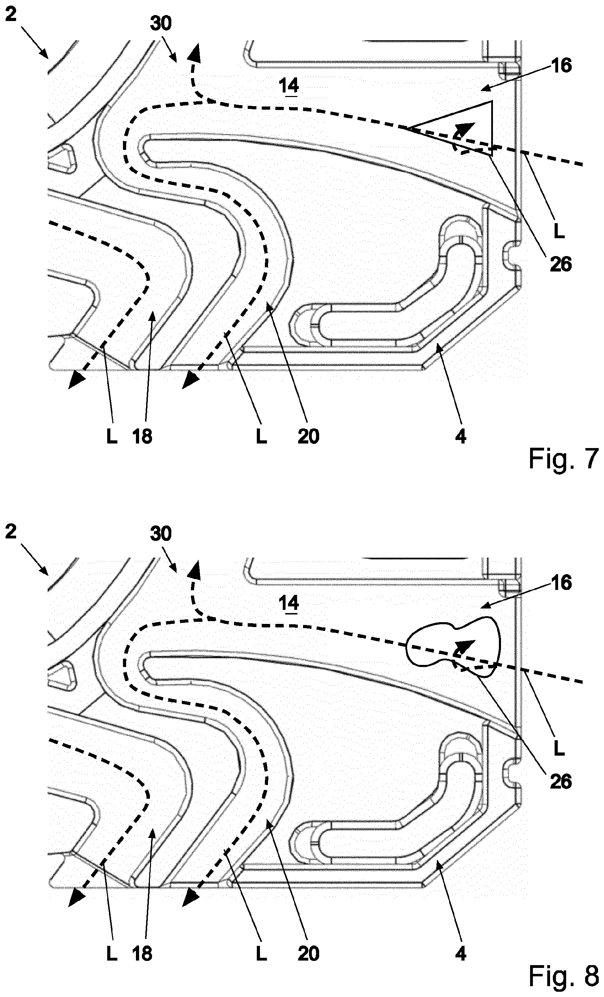

Fig. 7 zeigt einen Luftmassensensor 2 mit dreieckiger Ausgleichsöffnung 26.

Fig. 8 zeigt einen Luftmassensensor 2 mit frei geformter Ausgleichsöffnung 26.

Die gewählte Form der Ausgleichsöffnung 26 kann in Versuchen und/oder mittels Simulationen bestimmt werden und an die Einbausituation und die Anregungen im fertig montierten Zustand angepasst sein, so dass auch für kritische Anregungsfrequenzen eine zuverlässige Messung stattfinden kann. Insbesondere können auf diese Weise Eigenfrequenzen des Strömungskanals reduziert oder eliminiert werden.

Es kann vorgesehen sein, dass in den Deckel 12 Ausgleichsöffnungen 32 eingebracht sind, die entsprechend der Ausgleichsöffnungen 26 gemäß der Figuren 4 - 8 ausgestaltet sind.

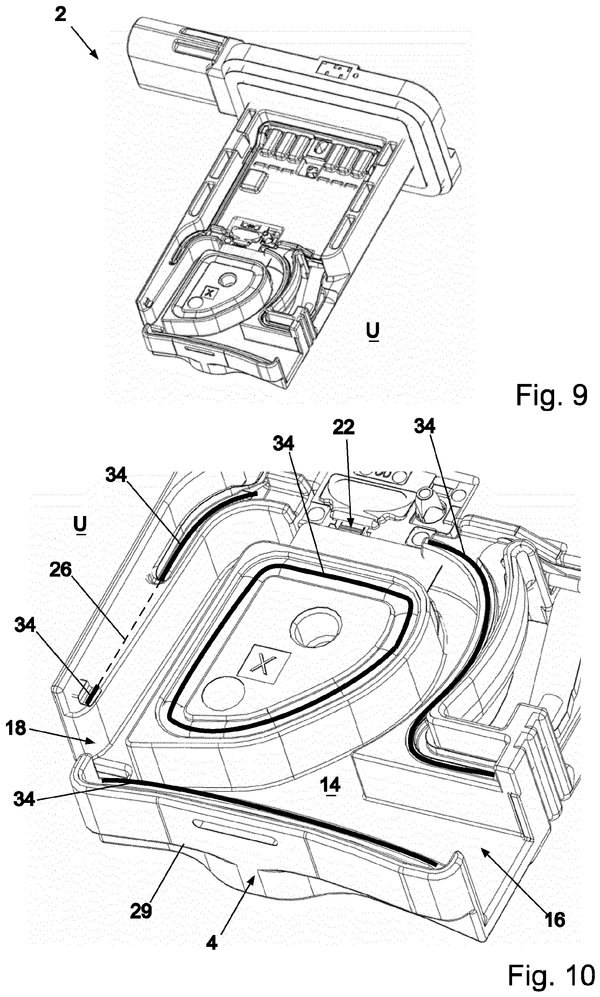

Die Figuren 9 und 10 zeigen eine weitere Ausgestaltung eines Luftmassensensors 2, der sich dadurch von der Variante gemäß Fig. 1 unterscheidet, dass kein Bypass vorgesehen ist und die Ausgleichsöffnung 26 als Unterbrechung einer Klebenaht 34 ausgebildet ist.

Fig. 10 ist eine vergrößerte Darstellung der Fig. 9.

Die Klebenähte 34 dienen dazu, den Deckel 12 mit dem Gehäuse 4 zu verbinden und den Strömungskanal 14 in den verklebten Bereichen gegenüber der Umgebung U abzudichten. Im Bereich der Ausgleichsöffnung 26 ist die links im Bild dargestellte Klebenaht 34 unterbrochen, so dass bei montiertem Deckel 12 ein Teil des Luftmassenstroms L durch die Ausgleichsöffnung 26 zwischen dem Deckel 12 und dem Grundkörper 29 des Gehäuses 4 entweichen kann.

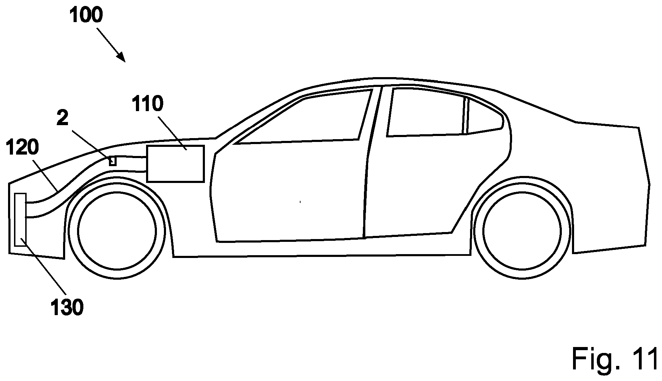

Fig. 11 zeigt ein Kraftfahrzeug 100, mit einem turboaufgeladenen Verbrennungsmotor 110 und mit einem Luftmassensensor 2, wobei der Luftmassensensor 2 in einer Ansaugleitung 120 des Verbrennungsmotors 110 angeordnet ist, um einen Luftmassenstrom innerhalb der Ansaugleitung 120 zu messen. Die Ansaugleitung 120 ist mit einem Ladeluftkühler 130 verbunden.

Das Kraftfahrzeug 100 kann gemäßer alternativer Ausgestaltungen der Erfindung ein Hybridfahrzeug sein, das ergänzend zu dem Verbrennungsmotor 110 mindestens einen Elektromotor mit einer zugeordneten Traktionsbatterie hat.

## Patentansprüche

1. Luftmassensensor zum Bestimmen eines Luftmassenstroms,
- mit einem Gehäuse (4) und
- mit einer Sensorelektronik (6),
- wobei die Sensorelektronik zumindest teilweise in einer Gehäusekammer (8) des Gehäuses (4) angeordnet ist,
- wobei das Gehäuse (4) einen Strömungskanal (14) zum Durchleiten eines zu messenden Luftmassenstroms (L) durch das Gehäuse (4) aufweist, und
- wobei das Gehäuse (4) zusätzlich zu einer Einlassöffnung (16) und einer Auslassöffnung (18) des Strömungskanals (14) mindestens eine Ausgleichsöffnung (26, 32) aufweist, die den Strömungskanal (14) mit einer Umgebung (U) des Gehäuses (4) verbindet
- **dadurch gekennzeichnet, dass**
- die Ausgleichsöffnung (26) im Bereich des Einlasses (16) des Strömungskanals (14) und stromaufwärts einer Verzweigung des Strömungskanals (14) in einen Messkanal (30) und einen Bypasskanal (20) angeordnet ist.

2. Luftmassensensor nach Anspruch 1,
**dadurch gekennzeichnet, dass**
- die Ausgleichsöffnung (26) zwischen Gehäuseteilen (12, 29) des Gehäuses (4) gebildet ist.

3. Luftmassensensor nach Anspruch 2,
**dadurch gekennzeichnet, dass**
- die Gehäuseteile (12, 29) mittels eines Klebers (34) miteinander verbunden sind,
- wobei die Ausgleichsöffnung (26) zumindest teilweise an einen die Gehäuseteile (12, 29) verbindenden Kleber (34) angrenzt.

4. Luftmassensensor nach Anspruch 3,
**dadurch gekennzeichnet, dass**
- die Ausgleichsöffnung (26) Teil einer unterbrochenen Klebenaht (34) oder unterbrochenen Kleberaupe ist.

5. Luftmassensensor nach einem der Ansprüche 2 - 4,
**dadurch gekennzeichnet, dass**
- zwischen den Gehäuseteilen (12, 29) eine Dichtung (34) vorgesehen ist,
- wobei die Ausgleichsöffnung (26) zumindest teilweise an die Dichtung (34) angrenzt.

6. Luftmassensensor nach Anspruch 5,
**dadurch gekennzeichnet, dass**
- die Ausgleichsöffnung (26) in die Dichtung (34) eingebracht ist oder die Dichtung (34) zumindest teilweise unterbrochen ist, um die Ausgleichsöffnung (26) auszubilden.

7. Luftmassensensor nach einem der voranstehenden Ansprüche,
**dadurch gekennzeichnet, dass**
- die Ausgleichsöffnung (26) eine polygonale Form hat, insbesondere eine rechteckige oder dreieckige Form hat
- oder die Ausgleichsöffnung (26) eine kreisrunde oder ovale Form hat
- oder zwei oder mehr Ausgleichsöffnungen (26) vorgesehen sind.

8. Kraftfahrzeug,
**gekennzeichnet durch**
- einen Luftmassensensor (2) nach einem der Ansprüche 1 - 7.

9. Kraftfahrzeug nach Anspruch 8,
- mit einem Verbrennungsmotor (110),
**dadurch gekennzeichnet, dass**
- der Luftmassensensor (2) in einer Ansaugleitung (120) des Verbrennungsmotors (110) angeordnet ist, um einen Luftmassenstrom innerhalb der Ansaugleitung (120) zu messen.

## Claims

1. Air mass sensor for determining an air mass flow,
- comprising a housing (4) and
- comprising sensor electronics (6),
- wherein the sensor electronics is at least partly arranged in a housing chamber (8) of the housing (4),
- wherein the housing (4) has a duct (14) for passing through the housing (4) an air mass flow (L) to be measured, and
- wherein, in addition to an inlet port (16) and an outlet port (18) of the duct (14), the housing (4) has at least one compensation port (26, 32) which connects the duct (14) to surroundings (U) of the housing (4),
- **characterized in that**
- the compensation port (26) is arranged in the region of the inlet (16) of the duct (14) and upstream of a branching of the duct (14) into a measuring channel (30) and a bypass channel (20).

2. Air mass sensor according to Claim 1, **characterized in that**
- the compensation port (26) is formed between housing parts (12, 29) of the housing (4).

3. Air mass sensor according to Claim 2, **characterized in that**
- the housing parts (12, 29) are connected to one another by means of an adhesive (34),
- wherein the compensation port (26) at least partially borders an adhesive (34) connecting the housing parts (12, 29).

4. Air mass sensor according to Claim 3, **characterized in that**
- the compensation port (26) is part of an interrupted adhesive seam (34) or interrupted adhesive bead.

5. Air mass sensor according to any of Claims 2-4, **characterized in that**
- a seal (34) is provided between the housing parts (12, 29),
- wherein the compensation port (26) at least partially borders the seal (34).

6. Air mass sensor according to Claim 5, **characterized in that**
- the compensation port (26) is introduced into the seal (34) or the seal (34) is at least partially interrupted to form the compensation port (26).

7. Air mass sensor according to any of the preceding claims,
**characterized in that**
- the compensation port (26) has a polygonal shape, in particular a rectangular or triangular shape,
- or the compensation port (26) has a circular or oval shape,
- or two or more compensation ports (26) are provided.

8. Motor vehicle,
**characterized by**
- an air mass sensor (2) according to any of Claims 1-7.

9. Motor vehicle according to Claim 8,
- comprising an internal combustion engine (110),
**characterized in that**
- the air mass sensor (2) is arranged in an intake line (120) of the internal combustion engine (110) to measure an air mass flow within the intake line (120).

## Revendications

1. Capteur de masse d'air destiné à déterminer un débit massique d'air,
- comprenant un boîtier (4) et
- comprenant une électronique de capteur (6),
- l'électronique de capteur étant disposée au moins en partie dans une chambre de boîtier (8) du boîtier (4),
- le boîtier (4) possédant un canal d'écoulement (14) destiné à conduire un débit massique d'air (L) à mesurer à travers le boîtier (4), et
- le boîtier (4) possédant, en plus d'une ouverture d'entrée (16) et d'une ouverture de sortie (18) du canal d'écoulement (14), au moins une ouverture de compensation (26, 32) qui relie le canal d'écoulement (14) à l'environnement (U) du boîtier (4)
- **caractérisé en ce que**
- l'ouverture de compensation (26) est disposée dans la zone de l'entrée (16) du canal d'écoulement (14) et en amont d'une bifurcation du canal d'écoulement (14) en un canal de mesure (30) et un canal de contournement (20) .

2. Capteur de masse d'air selon la revendication 1,
**caractérisé en ce que**
- l'ouverture de compensation (26) est formée entre les parties de boîtier (12, 29) du boîtier (4).

3. Capteur de masse d'air selon la revendication 2,
**caractérisé en ce que**
- les parties de boîtier (12, 29) sont reliées entre elles au moyen d'un adhésif (34),
- l'ouverture de compensation (26) étant au moins partiellement adjacente à un adhésif (34) qui relie les parties de boîtier (12, 29).

4. Capteur de masse d'air selon la revendication 3,
**caractérisé en ce que**
- l'ouverture de compensation (26) fait partie d'une ligne de colle discontinue (34) ou d'un cordon de colle discontinu.

5. Capteur de masse d'air selon l'une des revendications 2 à 4,
**caractérisé en ce que**
- une garniture d'étanchéité (34) est prévue entre les parties de boîtier (12, 29),
- l'ouverture de compensation (26) étant au moins partiellement adjacente à la garniture d'étanchéité (34).

6. Capteur de masse d'air selon la revendication 5,
**caractérisé en ce que**
- l'ouverture de compensation (26) est ménagée dans la garniture d'étanchéité (34) ou la garniture d'étanchéité (34) est au moins partiellement interrompue pour former l'ouverture de compensation (26).

7. Capteur de masse d'air selon l'une des revendications précédentes,
**caractérisé en ce que**
- l'ouverture de compensation (26) a une forme polygonale, en particulier une forme rectangulaire ou triangulaire
- ou l'ouverture de compensation (26) a une forme circulaire ou ovale
- ou deux ouvertures de compensation (26) ou plus sont prévues.

8. Véhicule automobile,
**caractérisé par**
- un capteur de masse d'air (2) selon l'une des revendications 1 à 7.

9. Véhicule automobile selon la revendication 8,
- comprenant un moteur à combustion interne (110),
**caractérisé en ce que**
- le capteur de masse d'air (2) est disposé dans une conduite d'admission (120) du moteur à combustion interne (110) afin de mesurer un débit massique d'air à l'intérieur de la conduite d'admission (120).
